# EUROPEAN PATENT APPLICATION

(11) **EP 1 582 977 A2**
(43) Date of publication of application: **05.10.2005**
(21) Application number: 05251183.9
(22) Date of filing: 28.02.2005
(51) Int. Cl.: G06F 9/44

(54) **Generation and conversion of object**

(30) Priority: 26.02.2004 JP 2004052271; 15.03.2004 JP 2004072969; 14.01.2005 JP 2005007890
(71) Applicant: Ricoh Company, Ltd., Tokyo 143-8555 (JP)
(72) Inventor: Sumi, Yasuyuki, Yokohama-shi, Kanagawa (JP)
(74) Representative: Mounteney, Simon James

(57) **Abstract**

An information processing apparatus includes an object generating unit configured to generate an object, and a memory operable to store first definition information that defines attribute information of the object according to a type of the object, wherein the object includes an attribute information managing unit configured to manage the attribute information by associating attribute names with attribute values, and an interference unit, applicable to a plurality of items of the attribute information, configured to receive a request for setting the attribute information and a request for acquiring the attribute information, and wherein the object generating unit is configured to assign the attribute information corresponding to the type of the generated object to the object based on the first definition information.

## Description

### BACKGROUND OF THE INVENTION

### 1. Field of the Invention

The present invention generally relates to information processing apparatuses, object generating methods, object converting methods, object generating programs, object converting programs, and record media, and particularly relates to an information processing apparatus, an object generating method, an object converting method, an object generating program, an object converting program, and a record medium for managing predetermined resources as objects.

### 2. Description of the Related Art

In recent years, object-oriented programming has been widely used. The object-oriented programming models a concept to be processed by the program as a class. Information (data) constituting the concept and operations (procedures) with respect to the concept are managed as a single integral unit (object), thereby achieving logical structuring of the program (refer to Patent Document 1, for example)

Combining the procedure and data as a single unit makes it possible to structure the program into modules and improve the reusability of the modules. Further, the concept "inheritance" is utilized to provide for new functions to be added simply by implementing a differential from the existing functions (differential programming). This improves efficiency of program development with respect to expansion of functions and the like.

One record in a database may be mapped to an object, for example, thereby making it easier and more intuitively graspable to treat the database in association with application programs. Taking an RDB (relational database) as an example, one table may be related to a single class. An instance (object) of this class is then mapped to a record of the table.

As a technology for making it easier to expand functions, Patent Document 2 discloses an invention regarding a system that includes a plurality of functional components, which are portable and individualized, and which correspond to particular segments of device drivers used by a control processor. These functional components include lower-level APIs and external APIs, and perform various network processor functions, including the receipt and transfer of packets on networks, functions necessary for the control processor to instruct and communicate with a network processor, etc. Further, the functional components are designed to be adaptable to various types of available processor architectures and operation systems, and are also designed to allow customers or programmers to customize and expand available network services. This provides a network processor service architecture that is easy to expand and independent of a particular processor or operation system.

Further, Patent Document 3 discloses an invention regarding a service providing apparatus. This service providing apparatus provides service software with respect to each service (copying, FAX, printing, etc.), thereby providing for addition or modification of devices to be flexibly managed.

In an attempt to improve efficiency of product development, Patent Document 4 discloses an invention regarding an image forming apparatus that receives data inclusive of expanded control code from the standard output of an application (terminal display application) for displaying on a terminal (i.e., outputting to the standard output), calls a display function specified by the received expanded control code, and attends to displaying on the display unit based on the called function so as to present various information on the display unit as specified by the expanded control code contained in the received data. With this provision, it is possible to transfer efficiently a terminal application operable on workstations or personal computers to such information forming apparatus.
[Patent Document 1] Japanese Patent Application Publication No. 9-034710
[Patent Document 2] Japanese Patent Application Publication No. 2001-325203
[Patent Document 3] Japanese Patent Application Publication No. 2003-274068
[Patent Document 4] Japanese Patent Application Publication No. 2003-283717

When the schema of a database is modified, the class specifications also need to be modified in order to maintain correspondences between objects and records. Namely, when an item is added to a table, an attribute corresponding to this item needs to be added, and a new implementation is necessary such as to make the value of the item reflect the value of the attribute.

When a new table is added, a new class corresponding to this table needs to be defined, and a new implementation is necessary for this new class. Further, a modification to a class specification affects the higher-order applications that use objects of the class. Because of this, renewed compiling and linking are necessary for the higher-order applications in addition to the compiling and linking of the class. This needs to be done even if the higher-order applications do not need to use the expanded attributes. Such work is cumbersome.

Accordingly, there is a need for an information processing apparatus, an object generating method, an object converting method, an object generating program, an object converting program, and a record medium for providing for efficient modification to be made to object specifications.

### SUMMARY OF THE INVENTION

It is a general object of the present invention to provide an information processing apparatus, an object generating method, an object converting method, an object generating program, an object converting program, and a record medium that substantially obviate one or more problems caused by the limitations and disadvantages of the related art.

Features and advantages of the present invention will be presented in the description which follows, and in part will become apparent from the description and the accompanying drawings, or may be learned by practice of the invention according to the teachings provided in the description. Objects as well as other features and advantages of the present invention will be realized and attained by an information processing apparatus, an object generating method, an object converting method, an object generating program, an object converting program, and a record medium particularly pointed out in the specification in such full, clear, concise, and exact terms as to enable a person having ordinary skill in the art to practice the invention.

To achieve these and other advantages in accordance with the purpose of the invention, the invention provides an information processing apparatus, which includes an object generating unit configured to generate an object, and a memory operable to store first definition information that defines attribute information of the object according to a type of the object, wherein the object includes an attribute information managing unit configured to manage the attribute information by associating attribute names with attribute values, and an interference unit, applicable to a plurality of items of the attribute information, configured to receive a request for setting the attribute information and a request for acquiring the attribute information, and wherein the object generating unit is configured to assign the attribute information corresponding to the type of the generated object to the object based on the first definition information.

The information processing apparatus as described above can generate an object having attribute information as specified by the first definition information. When the attribute information of an object is modified, therefore, all that is necessary is to modify the first definition information. There is no need for modifying, compiling, and linking of the source code.

Furthermore, the present invention provides an object generating method corresponding to the above-noted information processing apparatus, an object converting method, an object generating program for causing a computer to perform the object generating method, an object converting program for causing a computer to perform the object converting method, and record media having these programs embodied therein.

### BRIEF DESCRIPTION OF THE DRAWINGS

Other objects and further features of the present invention will be apparent from the following detailed description when read in conjunction with the accompanying drawings, in which:
Fig. 1 is a drawing showing an example of the construction of a device management system according to an embodiment of the present invention;
Fig. 2 is a drawing showing an example of the hardware construction of a data management apparatus according to an embodiment of the present invention;
Fig. 3 is a drawing showing an example of the functional configuration of the data management apparatus according to the embodiment of the present invention;
Fig. 4 is a drawing showing an example of the functional configuration of a common module;
Fig. 5 is a drawing showing an example of definitions provided in an object definition file;
Fig. 6 is a drawing showing an example of detailed information regarding a relationship;
Fig. 7 is a drawing showing a class diagram showing contents defined in the object definition file;
Figs. 8A and 8B are drawings showing the class specification of a template class;
Fig. 9 is a drawing showing the concept of management of attribute information by use of the template class;
Fig. 10 is a flowchart of a process of generating a managed object;
Fig. 11 is a drawing showing an example of the class diagram of a perpetuating API module;
Fig. 12 is a sequence chart for explaining a process of perpetuating a firmware object in a perpetuating DB;
Fig. 13 is a drawing showing an example of mapping information with respect to one attribute;
Fig. 14 is a sequence chart for explaining a process of converting a DB record into a managed object;
Fig. 15 is a sequence chart for explaining a process of perpetuating a firmware object in a perpetuating file;
Fig. 16 is a drawing showing an example of mapping information in the case where the place for perpetuation is a perpetuating file; and
Fig. 17 is a drawing showing an example of a class diagram of a connecting API module.

### DESCRIPTION OF THE PREFERRED EMBODIMENTS

In the following, embodiments of the present invention will be described with reference to the accompanying drawings.

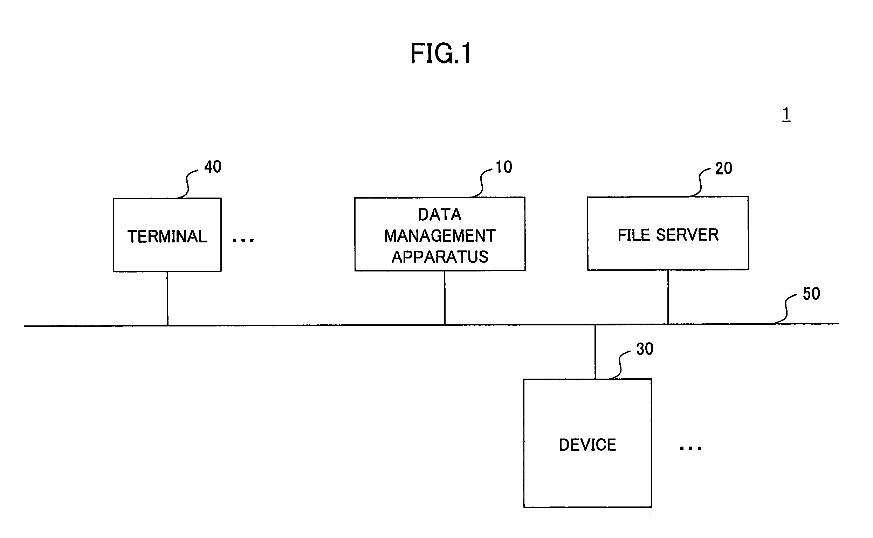

Fig. 1 is a drawing showing an example of the construction of a device management system according to an embodiment of the present invention. As shown in Fig. 1, a device management system 1 according to the embodiment includes a data management apparatus 10, a file server 20, at least one device 30, and at least one terminal 40, which are connected together via a network 50 such as a LAN.

The data management apparatus 10 is a computer that provides management functions for managing the device 30. The management functions for managing the device 30 include providing various information regarding the device 30, setting various parameters with respect to the device 30, uploading firmware with respect to the device 30, etc. The data management apparatus 10 has a function to serve as a Web server. With this provision, the user of the terminal 40 can use the functions of the data management apparatus 10 via a Web page provided by the data management apparatus 10.

The file server 20 is a computer for managing the firmware that is uploaded by the data management apparatus 10 to the device 30. Before uploading the firmware to the device 30, the data management apparatus 10 downloads the firmware from the file server 20, and keeps it under its management. The downloading of the firmware by the data management apparatus 10 from the file server 20 is performed in response to an instruction (HTTP request) from the terminal 40.

The device 30 is a network device managed by the data management apparatus 10. The device 30 may be a conventional printer or a multi-functional peripheral that has a plurality of applications for providing multiple services such as printing, coping, facsimile, and the like.

The terminal 40 is a terminal such as a PC (personal computer), PDA (personal digital (data) assistants), or cellular phone that is provided with a Web browser for displaying a Web page provided from the data management apparatus 10. The terminal 40 is used by a user of the device management system 1 when the user uses the device management system 1.

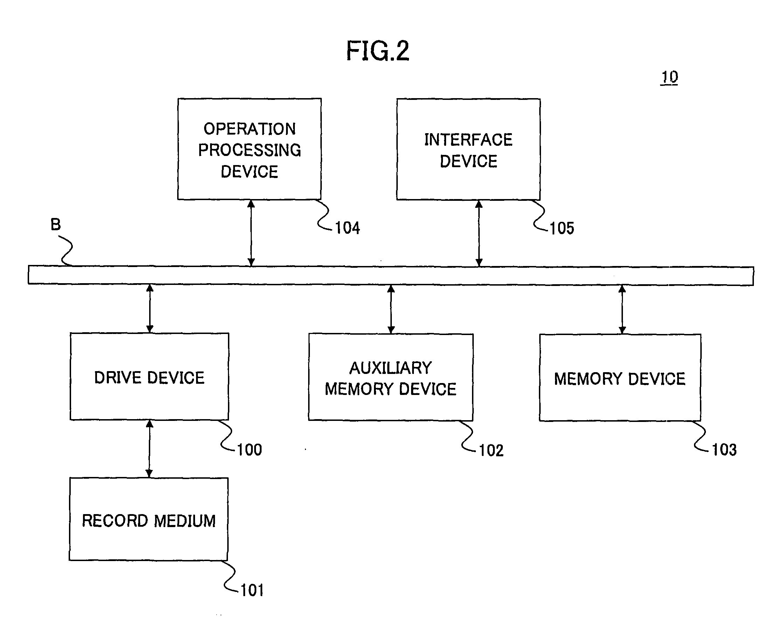

In the following, a detailed description of the data management apparatus 10 will be given. Fig. 2 is a drawing showing an example of the hardware construction of the data management apparatus according to an embodiment of the present invention. The data management apparatus 10 of Fig. 2 includes a drive device 100, an auxiliary memory device 102, a memory device 103, an operation processing device 104, and an interface device 105, which are connected together via a bus B.

A device management program for implementing the operation of the data management apparatus 10 is provided in the form of a record medium 101 such as a CD-ROM. As the record medium 101 having the device management program recorded therein is set in the drive device 100, the device management program is installed from the record medium 101 to the auxiliary memory device 102 via the drive device 100. The auxiliary memory device 102 stores the installed device management program, and also stores necessary files, data, etc.

The memory device 103 reads the device management program from the auxiliary memory device 102 for storage therein in response to an instruction for the activation of the device management program. The operation processing device 104 carries out the functions of the data management apparatus 10 according to the device management program stored in the memory device 103. The interface device 105 is comprised of a modem, a router, etc., for example, and is used to provide a connection with the network 50 of Fig. 1.

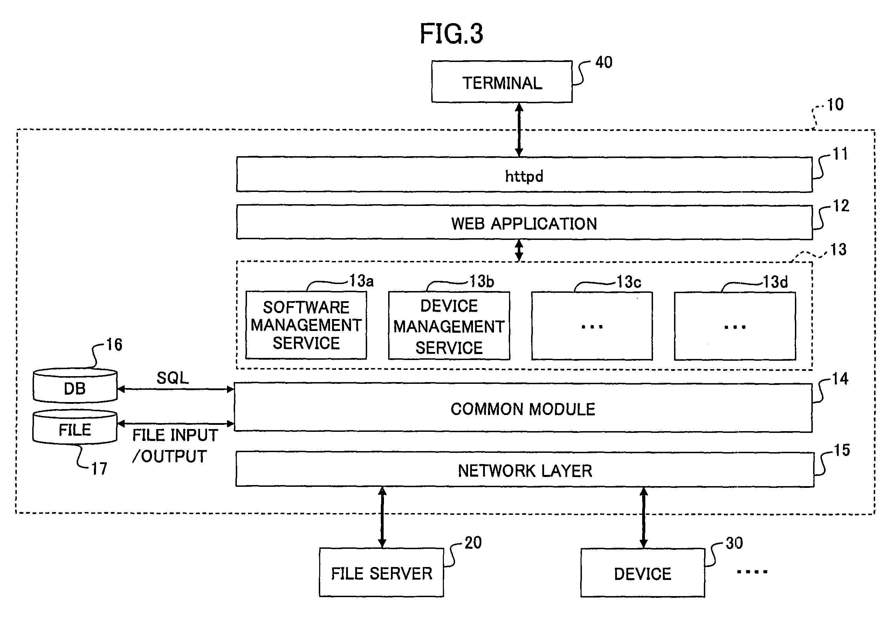

Fig. 3 is a drawing showing an example of the functional configuration of the data management apparatus according to the embodiment of the present invention. As shown in Fig. 3, the data management apparatus 10 includes an httpd 11, a Web application 12, a Web service 13 such as a software management service 13a and a device management service 13b, a common module 14, a network layer 15, a perpetuating DB (database) 16, and a perpetuating file 17.

The httpd 11 is a demon program for requesting the Web application 12 to provide information (Web page) that is requested by an HTTP request received from the terminal 40. The httpd 11 further transmits the Web page generated by the Web application 12 to the terminal 40 as part of the HTTP response. The Web application 12 is a Web application for performing a process requested by the terminal 40 and generating a Web page for presenting the process results.

The software management service 13a is a set of modules that provide management functions (hereinafter referred to as "firmware management function") for managing firmware to be uploaded to the device 30, to higher-order applications (Web application 12) as a Web service. The firmware management function includes the downloading of firmware from the file server 20, the storing of the firmware, the provision of information regarding the firmware, the setting of a schedule for uploading the firmware to the device 30, etc.

The device management service 13b is a set of modules that provide the management functions (hereinafter referred to as "device management function") for managing the device 30 under the management of the data management apparatus 10 to the upper-order applications as a Web service. The device management function includes the provision of information regarding the device 30, the uploading of firmware to the device 30, the setting of various parameters with respect to the device 30, etc.

Modules 13c and 13d are illustrated here as examples of Web services that provide various services associated with the device management. Communication between the Web application 12 and the Web service 13 may be performed by use of SOAP (Simple Object Access Protocol).

The perpetuating DB 16 and the perpetuating file 17 are the means to perpetuate (store) objects (hereinafter referred to as "managed object") that are models of items managed by each Web service 13. Here, the managed items include firmware in the case of the software management service 13a, and include the device 30 in the case of the device management service 13b. Namely, the software management service 13a treats a single firmware package as a single managed object, and the device management service 13b treats a single device 30 as a single managed object. In this embodiment, the perpetuating file 17 perpetuate managed objects in the XML (extensible Markup Language) format.

The common module 14 is a set of modules that provide each Web service 13 with a means for generating managed objects. Further, the set of modules provide a means (API (Application Program Interface)) that allows the Web service 13 to access the perpetuating DB 16, the perpetuating file 17, the device 30, and the like without being conscious of the interface (SQL) for the perpetuating DB 16, the interface (DOM (Document Object Model)) for the perpetuating file 17, and the communication protocol for the device 30.

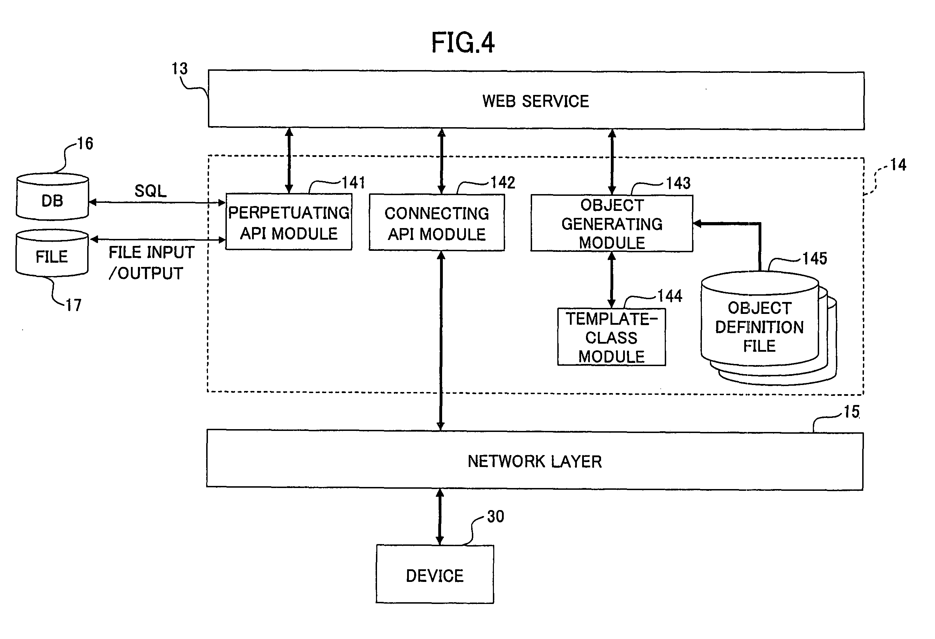

In the following, a further description will be given of the common module 14. Fig. 4 is a drawing showing an example of the functional configuration of the common module 14. As shown in Fig. 4, the common module 14 includes a perpetuating API module 141, a connecting API module 142, an object generating module 143, a template-class module 144, and an object definition file 145.

The perpetuating API module 141 provides the Web service 13 with an API (perpetuating API) for the managed object perpetuating means (perpetuating DB 16 and perpetuating file 17). For example, the perpetuating API module 141 provides via the perpetuating API such functions as the function for perpetuating managed objects, the function for managing transactions, the function for searching for, adding, deleting, and updating information regarding managed objects. Accordingly, the software management service 13a, for example, utilizes the perpetuating API module 141 to manipulate the perpetuating DB 16 and the perpetuating file 17 without being conscious of SQL or a file input/output interface (such as DOM).

The connecting API module 142 provides the Web service 13 with an API (connecting API) for network resources such as the device 30. For example, the connecting API module 142 provides via the connecting API such functions as the function for detecting the device 30, the function for acquiring information from the device 30, the function for setting information in the device 30, and the function for remotely control the device 30. Accordingly, the device management service 13b, for example, utilizes the connecting API module 142 to manipulate the device 30 without being conscious of the communication protocol for the device 30.

The object definition file 145 defines the specifications of managed objects managed by each Web service 13 separately for each type of a managed object. In general, the type of an object is referred to by the term "class". The reason why the term "type" is used here is because there is a need to avoid confusion with the class actually implemented as source code. As will become apparent from a subsequent description, objects having any "type" defined in the object definition file 145 are generated as instances having the same implemented class (template class) in this embodiment. Because of this, there is a need for clear distinction in terms of terminology. It should be noted that the type of a managed object is defined separately for each kind of a managed object. Accordingly, a firmware type for firmware, a device type for the device 30, and the like are each defined as a type.

The template-class module 144 is implemented for a single class (template class) serving as a common template with respect to all the types of managed objects defined in the object definition file 145. The object generating module 143 has the function to turn a managed object requested by the Web service 13 into an instance by use of the object definition file 145 and the template-class module 144, followed by providing the managed object to the Web service 13.

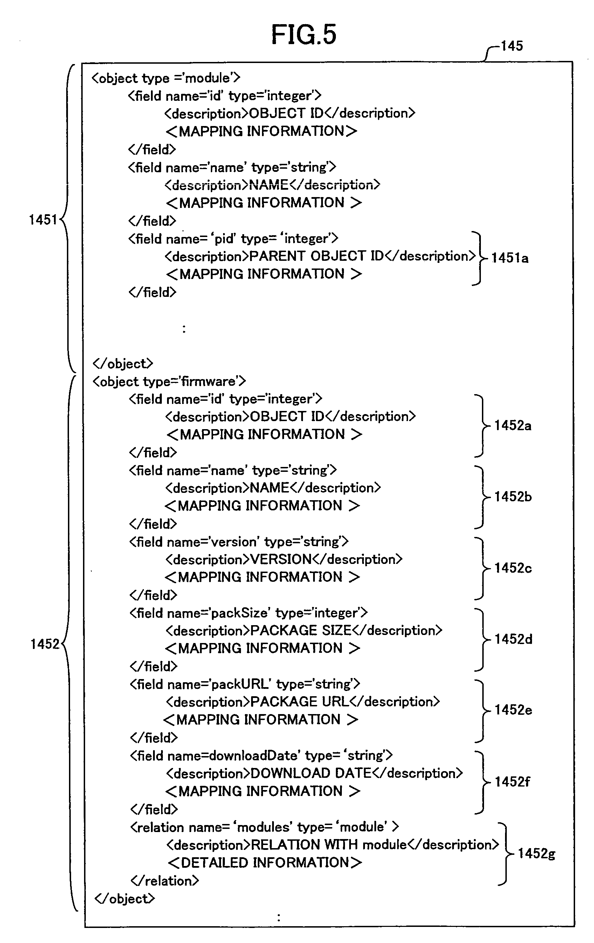

In the following, a further description will be given of the object definition file 145. Fig. 5 is a drawing showing an example of definitions provided in the object definition file. As shown in Fig. 5, the object definition file 145 according to this embodiment provides definitions by use of XML (extensible Markup Language). In the object definition file 145, an object element enclosed in the <object> tags defines the type of each managed object. In this embodiment, an object element 1451 and an object element 1452 define two types. In each object element, a type attribute is defined, so that the name (type name) of the type can be identified by the type attribute. With respect to the object element 1451 and object element 1452, the type names of the managed objects are defined as "module" and "firmware", respectively. It should be noted that "firmware" is the type that represents a firmware package, and "module" is the type that represents each module contained in the package.

In the object element, a field element enclosed in the <field> tags may be defined as a child element. A single field element corresponds to a definition of a single attribute of the managed object, and includes a name attribute indicative of the name of the attribute and a type attribute indicative of the data type of the attribute. For example, the object element 1452 includes six field elements 1452a, 1452b, 1452c, 1452d, 1452e, and 1452f, which reveals that the managed object of the firmware type has six attributes.

In the object element, further, a relation element enclosed in the <relation> tags may be defined as a child element. A single relation element corresponds to a definition of a relationship (aggregation relationship) between the relevant managed object and another managed object, and includes a name attribute indicative of the name of the relationship for the purpose of identifying individual relationships and a type attribute for identifying the type of the related managed object. For example, the object element 1452 includes a relation element 1452g. The type attribute of the relation element 1452g is "module", which reveals that the managed object of the firmware type aggregates a managed object of the module type.

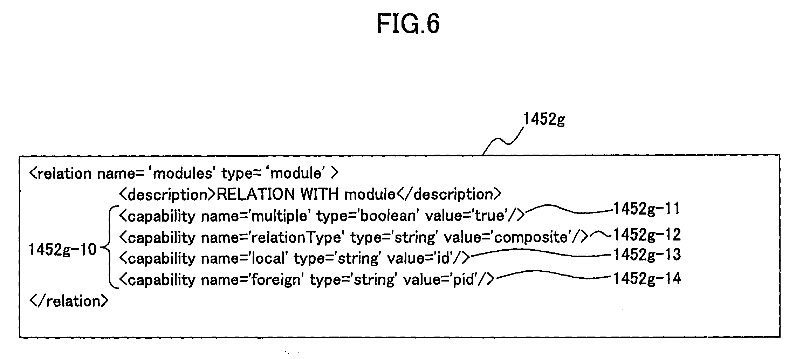

The relation element includes detailed information defined therein as a child element. Fig. 6 is a drawing showing an example of detailed information regarding a relationship. In Fig. 6, the relation element 1452g is extracted from Fig. 5 for illustration. In the relation element 1452g, a portion specified by reference numeral 1452g-10 constitute the detailed information. The detailed information 1452g-10 is comprised of one or more capability elements (i.e., elements enclosed in the <capability> tags). A single capability element corresponds to one of the parameters constituting the detained information, and has a name attribute, a type attribute, and a value attribute. The name attribute indicates a name given to a corresponding parameter for identification of each parameter. The type attribute indicates the data type of the parameter. The value attribute indicates the value of the parameter.

A capability element 1452g-11, for example, has the name attribute whose value is "multiple" and the value attribute whose value is "true". This indicates that the module relationship is a multiple relationship (i.e., a relationship to which a plurality of child objects may belong). A capability element 1452g-12 has the name attribute whose value is "relationType" and the value attribute whose value is "composite". This indicates that the module relationship is an aggregation relationship. A capability element 1452g-13 and capability element 1452g-14 have the name attributes whose values are "local" and "foreign", respectively. This indicates that the definition provides the way the relationship between a parent object and a child object is maintained. In this definition, the value of the local parameter is "id", and the value of the foreign parameter is "pid", so that the parent child relationship is maintained by setting the value of the id attribute of the parent object to the value of the pid attribute of the child object. Namely, the module object that is defined as a child object of the firmware object has a pid attribute (see the field element 1451a in Fig. 5), and the value of this pid attribute is set equal to the value of the id attribute of the firmware object that serves as a parent object.

In this manner, the object definition file 145 (Fig. 5) defines attribute information and relationship information according to the type of a managed object. The field element and relation element include a description element as a child element enclosed in the <description> tags. The description element indicates the meaning of attributes and relationships in the form apprehensible to users. Further, the field element includes mapping information as a child element. The mapping information includes a definition about how the attribute or relationship of the field element is mapped to the place where it is perpetuated when the managed object is to be perpetuated. A detail will be given later.

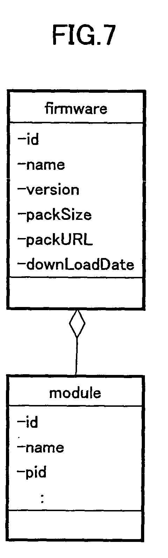

Fig. 7 is a drawing showing a class diagram showing the contents defined in the object definition file 145. In Fig. 7, a managed object of the firmware type (hereinafter simply referred to as "firmware object") has six attributes (id, name, version, packSize, packURL, downLoadDate). Further, it is shown that a managed object of the module type (hereinafter simply referred to as "module object") is aggregated.

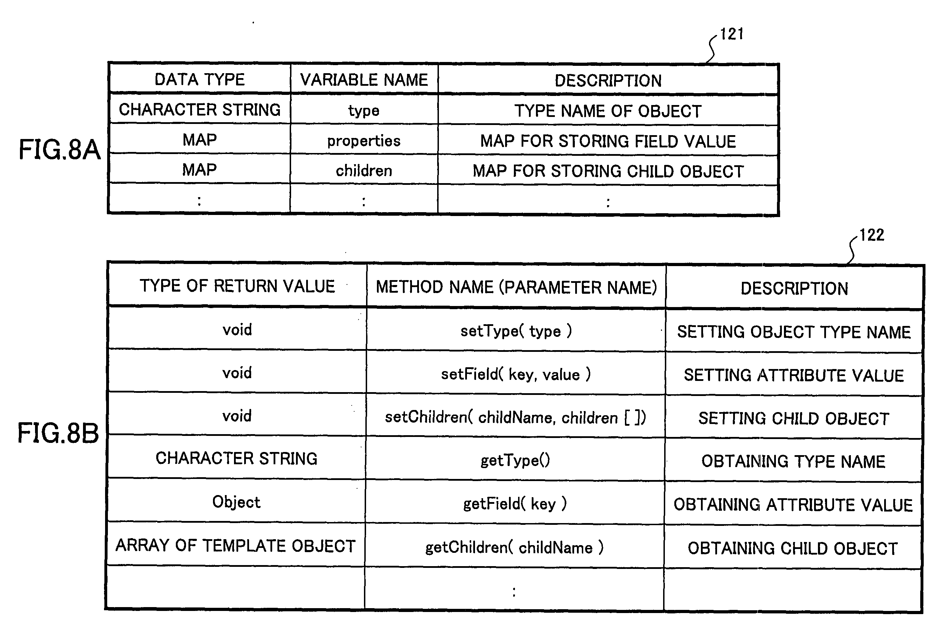

In the following, a description will be given of a template class implemented in the template-class module 144. As previously described, the template class is a class serving as a common template for all types of managed objects defined in the object definition file 145. Figs. 8A and 8B are drawings showing the class specification of the template class.

The template class has attributes (member variables) defined therein as shown in a table 121. A character-string-type variable "type" stores the type name of a managed object. A map-type variable "properties" stores the attribute value of a managed object by using the attribute name as a key. Here, the map is a container for managing one or more values by associating them with corresponding "keys". The container refers to a general-purpose data structure that can store any type. In the STL (Standard Template Library), for example, vector, list, deque (double ended queue), set, etc. are prepared in addition to the map.

Since an attribute value may assume various data types, a "value" in the map may be defined as the data type that is adaptable to any data type (e.g., the Object Type in the Java (registered trademark) language). In the following, the "data type adaptable to any data type" is referred to as "Object Type". A map-type variable "children" stores reference information such as a pointer to an aggregated managed object (child object) or to the local managed object by using the name of the managed object as a key. In the following, a managed object and its reference information are not differentiated from each other, and are collectively referred to as a managed object.

The template class further has a method defined therein as shown in a table 122. A method "setType" is used to set a type name, and assigns a value specified in the parameter (type) to the member variable "type". A method "setField" registers an attribute value specified in the second parameter (value) to the member variable "properties" by using the attribute name specified in the first parameter (key) as a key.

A method "setChildren" is used to set a child object, and registers an array of child objects specified in the second parameter (children[]) to the member variable "children" by using the name of the child objects specified in the first parameter (childName) as a key. As can be understood from the fact that the "setField" method and the "setChildren" method require an attribute name or the name of a child object as a parameter, both of these methods can be universally used regardless of the types of attributes or the types of relationships.

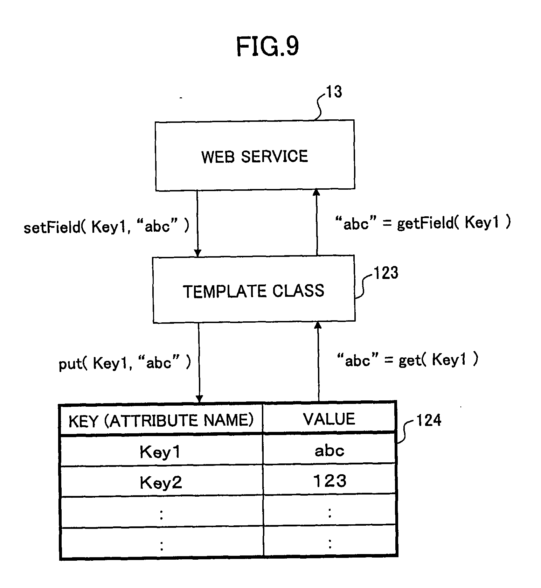

Fig. 9 is a drawing showing the concept of management of attribute information by use of the template class. Fig. 9 shows the way a template class 123 sets (puts) an attribute value in the map-type member variable "properties" 124 based on a call for the "setField" method from the Web service 13. Also, Fig. 9 illustrates the way the template class 123 obtains (gets) an attribute value from the "properties" 124 based on a call for the "getField" method. In the "properties" 124, the values of attributes are managed in association with attribute names serving as keys.

The "getType" method (Fig. 8B) provides for a type name to be obtained, and returns a type name stored in the member variable "type". The "getField" method provides for an attribute value to be obtained, and obtains an attribute value from the member variable "properties" by using the attribute name specified in the parameter (key) as a key, followed by returning the obtained attribute value. The "getChildren" method provides for a child object to be obtained, an obtains a child object from the member variable "children" by using the name of a child object specified in the parameter (childName) as a key, followed by returning an array of the child object. As can be understood from the fact that the "getField" method and the "getChildren" method require an attribute name or the name of a child object as a parameter, both of these methods can be universally used regardless of the types of attributes or the types of relationships.

In addition, a constructor and destructor are also defined with respect to the template class. In Figs. 8A and 8B, however, they are omitted for the sake of convenience.

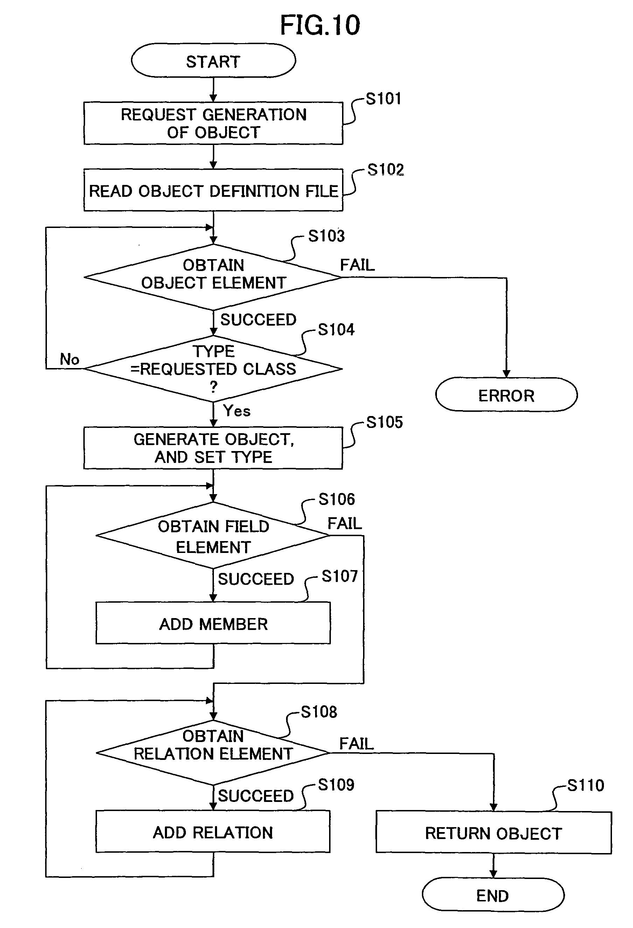

In the following, a description will be given of a process of generating a managed object by the object generating module 143, i.e., a process of allocating a managed object to a memory area of the memory device 103. Fig. 10 is a flowchart of a process of generating a managed object. Fig. 10 shows an example in which the software management service 13a requests the object generating module 143 to generate a firmware object (as an instance).

At step S101, the software management service 13a requests the object generating module 143 to generate a firmware-type managed object. Specifically, the software management service 13a calls an object generating method (createInstance) implemented in the object generating module 143 by specifying the type name "firmware" of the firmware object as a parameter.

Proceeding to step S102 following step S101, the object generating module 143 with its object generating method being called reads the definitions provided in the object definition file 145 (hereinafter simply referred to as "definitions") for storage in the memory device 103. Proceeding to step S103 following step S102, the object generating module 143 obtains one object element from the definitions.

Proceeding to step S104 following step S103, the object generating module 143 checks whether the obtained object element (hereinafter referred to as a current object element) has the value of the type attribute that is the same as the type name ("firmware") specified in the parameter of the object generating method. If they are not the same, the acquisition of an object element is repeated until the same object element is obtained (S103, S104). If the requested object element is not present after all (i.e., "failure" at step S103), the object generating module 143 returns an error as a return value of the object generating method.

If the requested object element is obtained, proceeding to step S105 following step S104, the object generating module 143 calls a constructor of the template class implemented in the template-class module 144, thereby turning the template object into an instance. Further, the object generating module 143 calls the "setType" method of the template object by using the value ("firmware") of the type attribute of the current object element as a parameter, thereby setting the type name with respect to the template object.

Proceeding to step S106 following step S105, the object generating module 143 obtains one field element from inside the current object element. If the acquisition of the field element is successful, proceeding to step S107 following step S106, the object generating module 143 specifies the value of the name attribute of the obtained field element as a first parameter to call the "setField" method of the template object, thereby adding an attribute to the template object.

If the field element 1452a (Fig. 5) is obtained, for example, "id" is specified as a first parameter. Further, the second parameter (attribute value) of the "setField" method may be set equal to an initial value (e.g., "0") of the attribute. In the object definition file 145, such an initial value may be specified as an attribute of the field element, thereby allowing such initial value to be specified as a second parameter of the "setField" method.

The object generating module 143 repeats the same process for other field elements so as to set in the template object the attributes corresponding to all the field elements defined as a child element of the current object element (S106, S107). If the processes for all the field elements are completed (i.e., "failure" at step S106), proceeding to step S108 following step S106, the object generating module 143 obtains one relation element from inside the current object element. If the acquisition of the relation element is successful, proceeding to step S109 following step S108, the object generating module 143 specifies the value of the name attribute of the obtained relation element as a first parameter to call the "setChildren" method of the template object, thereby adding a relationship with the child object to the template object.

If the relation element 112f (Fig. 5) is obtained, for example, "module" is specified as a first parameter. Here, the second parameter (child object) of the "setField" method may be set equal to the child object if the child object is already created as an instance. If creation as an instance is not yet performed, the second parameter may be set equal to the NULL value, for example.

The object generating module 143 repeats the same process for other relation elements so as to set in the template object the relationships corresponding to all the relation elements defined as a child element of the current object element (S108, S109). If the processes for all the relation elements are completed (i.e., "failure" at step S108), the object generating module 143 returns the template object having the attributes and relationships provided therein as a return value of the object generating method to the software management service 13a. With this, the process of the object generating method comes to an end.

In this manner, the software management service 13a acquires a pseudo firmware-type managed object (firmware object). Here, the term "pseudo" is used because of the following reason. Strictly speaking, the firmware object is an instance of the template class that is common to all the types. However, the contents of the firmware object, i.e., the map-type member variable "properties", have attribute information provided therein that corresponds to the firmware type. That is, this firmware object is in such conditions that properties as the firmware type are added thereto.

Accordingly, the software management service 13a may call the "setField" method or the "getField" method of the firmware object, thereby setting attributes defined in the firmware type or obtains the values of the attributes. Further, the software management service 13a may call the "setChildren" method or the "getChildren" method, thereby setting or acquiring a child object. In this manner, it is possible to treat the template object as a firmware-type managed object (firmware object).

As described above, the data management apparatus 10 generates an object of a given type based on the template class in which attribute information and relationship information are dynamically settable, thereby making it possible to generate an object having the attribute information and relationship information conforming to the definitions provided in the object definition file 145. In this embodiment, the concept of "type" is substantially the same as "class". If it is desired to add a new class or to modify the specification (attribute information and relationship information) of an existing class, therefore, all that is necessary is to modify the object definition file 145. There is no need for cumbersome work such as modifying the source codes, compiling, linking, etc. Further, there is no need to carry out compiling and linking with respect to the source code of existing applications unrelated to the expanded attribute information and relationship information. This achieves efficient software development with respect to modification of object specifications.

In the following, a description will be given of a process of perpetuating a firmware object in the perpetuating DB 16 by the perpetuating API module 141 in response to a request from the software management service 13a having obtained a managed object.

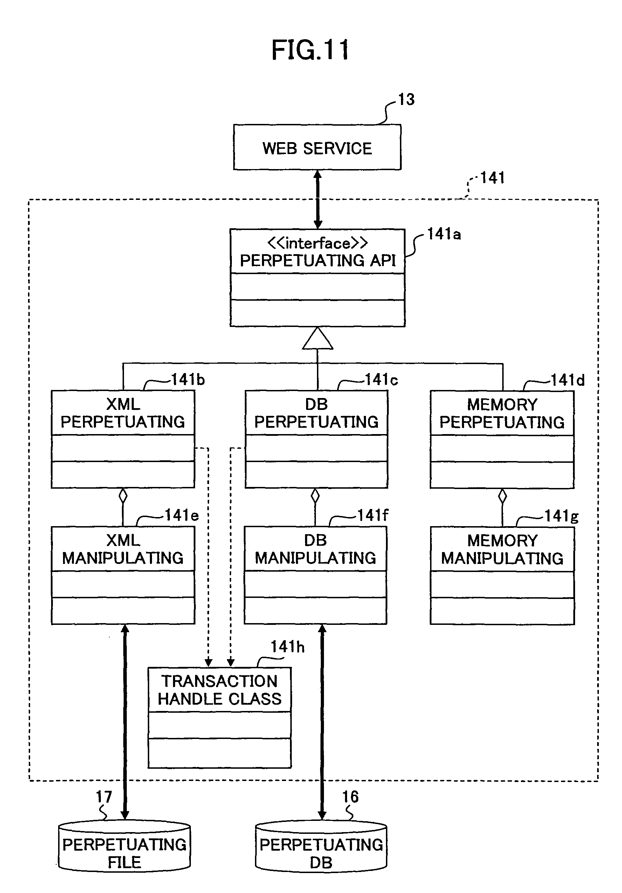

Fig. 11 is a drawing showing an example of a class diagram of the perpetuating API module. As shown in Fig. 11, the perpetuating API module 141 mainly includes a perpetuating API class 141a, an XML perpetuating class 141b, a DB perpetuating class 141c, a memory perpetuating class 141d, an XML manipulating class 141e, a DB manipulating class 141f, a memory manipulating class 141g, and a transaction handle class 141h.

The perpetuating API class 141a is an abstract class which defines only an interface for accessing various perpetuating means. The XML perpetuating class 141b, the DB perpetuating class 141c, and the memory perpetuating class 141d are sub-classes of the perpetuating API class 141a, and are concrete classes implemented to conform to the respective perpetuating means with respect to the interface defined in the perpetuating API class 141a. The XML perpetuating class 141b corresponds to the perpetuating file 17. The DB perpetuating class 141c corresponds to the perpetuating DB 16. The memory perpetuating class 141d corresponds to the memory device 103.

A concrete class such as the XML perpetuating class 141b is subjected to abstraction by a single perpetuating API class 141a. Because of this, the source code of the Web service 13 can be implemented by paying attention only to the perpetuating API class 141a. Accordingly, when a new perpetuating means is added, i.e., when a concrete class corresponding to the new perpetuating means is added as a sub-class of the perpetuating API class 141a, there is no need to modify the source code of the Web service 13.

Each concrete class aggregates the XML manipulating class 141e, the DB manipulating class 141f, or the memory manipulating class 141g (hereinafter referred to as "manipulating class" when a general reference is necessary). The manipulating class provides each concrete class with an interface that hides the interface (SQL, DOM, etc.) dependent on the perpetuating means corresponding to each concrete class. The transaction handle class 141h is used to manage information regarding transactions for the purpose of identifying individual transactions.

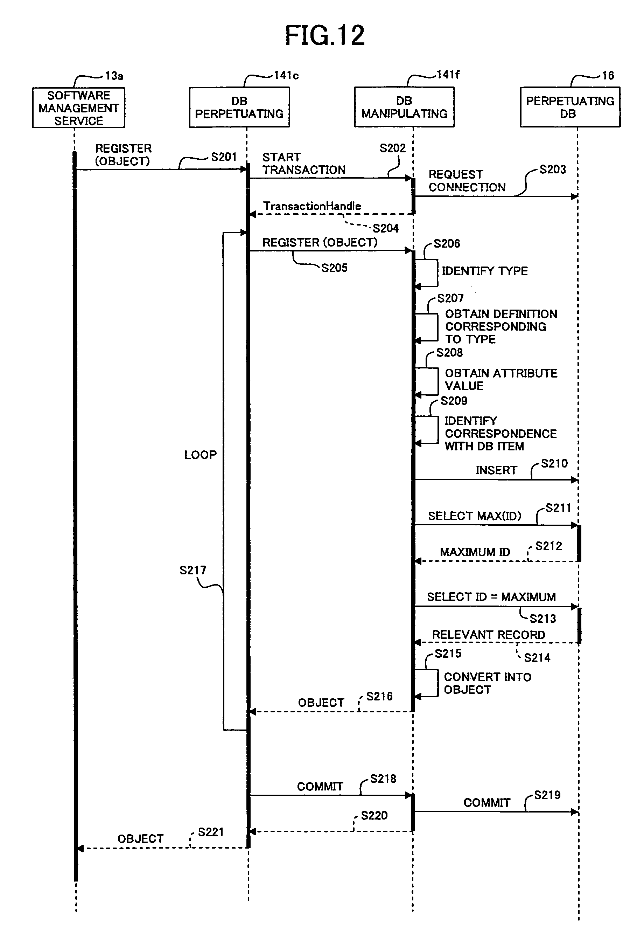

In the following, a description will be given of a process of perpetuating a firmware object with reference to a sequence chart. Fig. 12 is a sequence chart for explaining a process of perpetuating a firmware object in the perpetuating DB.

At step S201, the software management service 13a calls a registration method of the DB perpetuating object 141c by specifying the firmware object (hereinafter referred to as a current object) in the parameter, thereby requesting the DB perpetuating object 141c to perpetuate the current object. As can be seen from the class diagram of Fig. 11, the DB perpetuating object 141c is recognized as an instance of the perpetuating API class 141a when viewed from the software management service 13a.

Proceeding to step S202 following step S201, the DB perpetuating object 141c calls a transaction start method of the DB manipulating object 141f, thereby requesting the DB manipulating object 141f to start a transaction. Proceeding to step S203 following step S202, the DB manipulating object 141f establishes a connection with the perpetuating DB 16, and returns the transaction handle object 141h for controlling the transaction to the DB perpetuating object 141c (S204).

Proceeding to step S205 following step S204, the DB perpetuating object 141c specifies the current object as a parameter to call a registration method of the DB manipulating object 141f, thereby requesting the DB manipulating object 141f to register the current object in the database. Proceeding to step S206 following step S205, the DB manipulating object 141f calls the "getType" method of the current object whose registration is requested, thereby acquiring the type name (firmware) of the current object.

Proceeding to step S207 following step S206, the DB manipulating object 141f obtains a definition corresponding to the current object from the object definition file 145 based on the type name of the current object. In this example, the current object is a firmware object, so that the object element 1452 (Fig. 5) is obtained. Proceeding to step S208 following step S207, the DB manipulating object 141f obtains the attribute value of the current object based on the definition of the object element 1452. Namely, the DB manipulating object 141f identifies the attribute name of each attribute based on each field element contained in the object element 1452. Further, the DB manipulating object 141f calls the "getField" method of the current object by using each attribute name as a parameter, thereby acquiring the attribute value of each attribute.

Proceeding to step S209 following step S208, the DB manipulating object 141f identifies correspondences between the individual items of the perpetuating DB 16 and the individual attributes of the current object based on the mapping information of the individual field elements contained in the object element 1452.

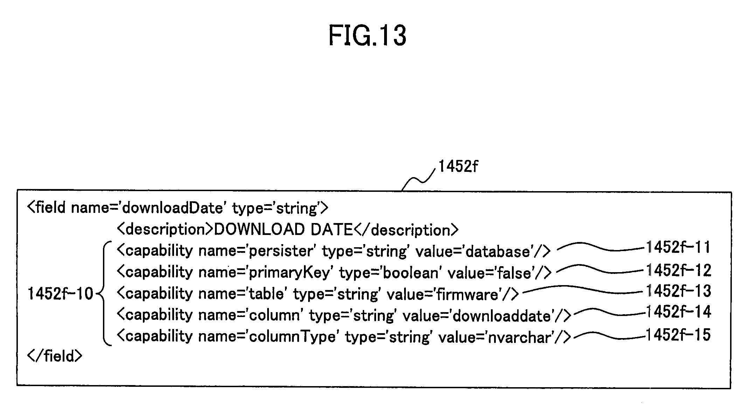

Fig. 13 is a drawing showing an example of the mapping information with respect to one attribute. In Fig. 13, the field element 1452f corresponding to the downloadDate attribute is extracted from Fig. 5 for illustration. In the field element 1452f, a portion identified by reference numeral 1452f-10 constitutes the mapping information. The mapping information 1452f-10 is comprised of one or more capability elements (i.e., elements enclosed in the <capability> tags).

For example, a capability element 1452f-11 has the name attribute whose value is "persister", and has the value attribute whose value is "database", which indicates that a place where the downloadDate attribute is perpetuated is a database (perpetuating DB 16). A capability element 1452f-12 has the name attribute whose value is "primaryKey", and has the value attribute whose value is "false", which indicates that the downloadDate attribute is not a primary key. A capability element 1452f-13 has the name attribute whose value is "table", and has the value attribute whose value is "firmware", which indicates that the downloadDate attribute is to be registered in the firmware table of the database. A capability element 1452f-14 has the name attribute whose value is "column", and has the value attribute whose value is "downloaddate", which indicates that the downloadDate attribute corresponds to the downloaddate item in the firmware table. A capability element 1452f-15 has the name attribute whose value is "columnType", and has the value attribute whose value is "nvarchar", which indicates that the downloaddate item of the firmware table corresponding to the downloadDate attribute has an nvarchar-type data type.

Accordingly, the DB manipulating object 141f identifies correspondences between the individual items in the perpetuating DB 16 and the individual attributes based on the mapping information about these attributes. The mapping information may as well be managed as a separate file from the object definition file 145. In this case, the object definition file 145 may include a description of link information (e.g., the name of the above-noted separate file) indicative of the separate file in place of the mapping information.

Proceeding to step S210 following step S209, DB manipulating object 141f adds a record corresponding to the current object to the table (firmware table) in the perpetuating DB 16 by use of the INSERT sentence of the SQL. In so doing, the DB manipulating object 141f maps the attribute values obtained at step S208 to the respective items of the perpetuating DB 16 based on the correspondences identified at step S209, thereby assigning values to the items of the record.

In the manner described above, the current object is converted into a record in the perpetuating DB 16.

Proceeding to step S211 following step S210, the DB manipulating object 141f requests the perpetuating DB 16 to search for the maximum value (hereinafter referred to as "maximum ID value") among the ID items in the firmware table, which prompts the perpetuating DB 16 to return the maximum ID value (S212). Proceeding to step S213 following step S212, the DB manipulating object 141f searches for a record whose ID item value is equal to the maximum ID value in the perpetuating DB 16. In the present embodiment, ID item values are arranged in an ascending order. Because of this, the record to be searched for in this case is the record registered at step S210 (hereinafter referred to as a current record).

Proceeding to step S215 following step S214, the DB manipulating object 141f converts the current record into a managed object (firmware object).

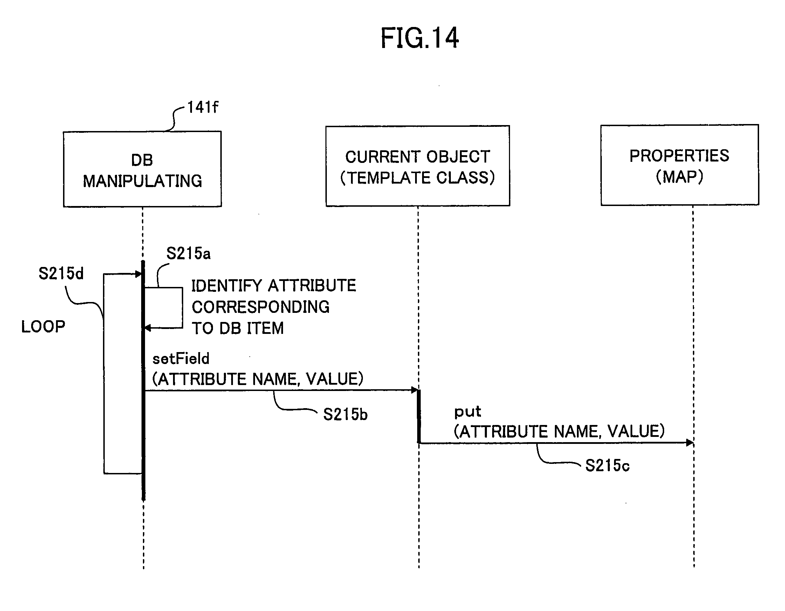

Fig. 14 is a sequence chart for explaining a process of converting a DB record into a managed object. The DB manipulating object 141f identifies an attribute (current attribute) of the current object corresponding to one item (current item) in the current record based on the definition provided in the object definition file 145 (S215a). The DB manipulating object 141f then calls the "setField" method of the current object by using the attribute name of the current attribute and the value of the current item as parameters (S215b). The current object assigns (puts) the value of the current item to the map-type member variable "properties" by using as a key the attribute name specified in the parameter of the "setField" method (S215c). The processes of steps S215a through S215c are performed with respect to all the items of the current record, so that the values of all the items of the current record are assigned to the attribute values of the attributes of the current object. This completes the conversion of the current record into an object.

As described above, the registered record is searched for despite the fact that the process relates to the registration request, and the outcome of the search is again assigned to the current object, i.e., the object for which perpetuation is requested. This is because it is preferable to ensure consistency between the contents of the perpetuating DB 16 and the contents of the current object reliably as a precaution against an event that assigning of item values to the perpetuating DB 16 is not carried out properly.

Proceeding to step S216 following step S215 (Fig. 12), the current object is returned to the DB perpetuating object 141c. Thereafter, the processes of step S204 through step S216 are performed recursively with respect to child objects, grandchild objects, and so on of the current object, so that the child objects and the like are also perpetuated as the records of the respective tables in the perpetuating DB 16.

When the perpetuating process is completed with respect to all the child objects and the like, proceeding to step S218, the DB perpetuating object 141c requests a commit from the DB manipulating object 141f, resulting in the DB manipulating object 141f requesting a commit from the perpetuating DB 16 (S219). As the control over the process is returned (S220), the DB perpetuating object 141c returns the current object to the software management service 13a (S221).

According to the data management apparatus 10 of the present embodiment as described above, at the time the contents (attributes, etc.) of the managed object are to be registered in the place where it will be perpetuated, the correspondences between the contents of the object and this place are dynamically identified (at the time the process is performed) based on the mapping information defined in the object definition file 145. Further, all types of managed objects are implemented through a single implementation class (template class), so that the upper-order modules can handle all of the types by use of the same interface. Accordingly, even when there is a modification to the schema or the like of the place for perpetuation, all that is necessary is to modify the definitions provided in the object definition file 145. There is no need to modify the source code relating to the process for converting managed objects into the format conforming to the place for perpetuation, and no need to modify the class definitions of the managed objects. In this manner, modification to the schema or the like of the place for perpetuation can be effectively handled.

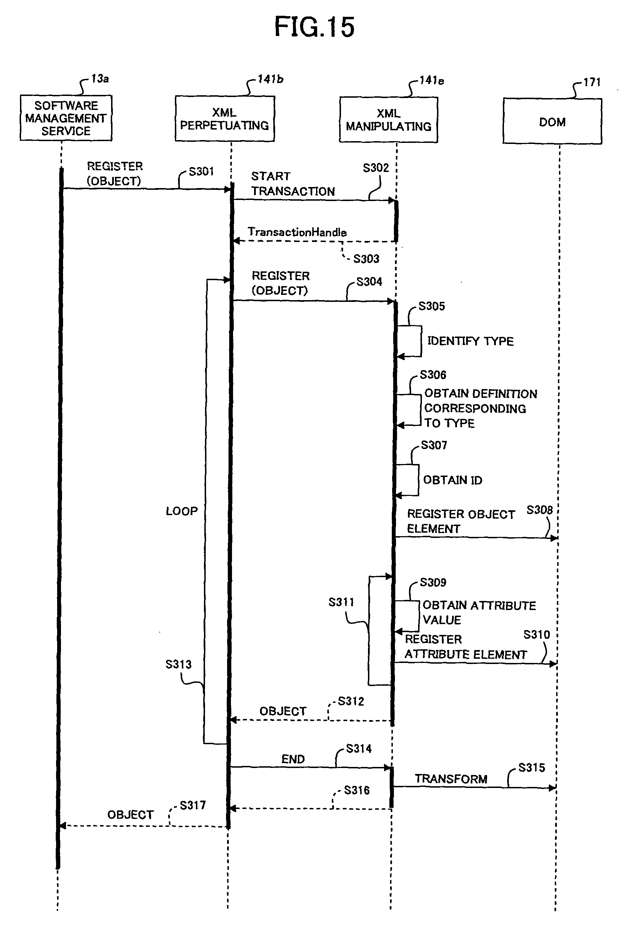

In the following, a description will be given of the case in which the place for perpetuation is the perpetuating file 17. Fig. 15 is a sequence chart for explaining a process of perpetuating a firmware object in the perpetuating file. The procedure shown in Fig. 15 overlaps the procedure shown in Fig. 12, and the overlapping portion will be described in a simplified manner as appropriate. It should be noted that the functions of the DB perpetuating object 141c and the DB manipulating object 141f as provided in Fig. 12 are replaced by the XML perpetuating object 141b and the XML manipulating object 141e, respectively, in Fig. 15.

The software management service 13a requests the XML perpetuating object 141b to perpetuate the firmware object (S301). In response, the XML perpetuating object 141b requests the XML manipulating object 141e to start a transaction (5302). The XML manipulating object 141e returns the transaction handle object 141h for controlling the transaction to the XML perpetuating object 141b (S303).

Proceeding to step S304 following step S303, the XML perpetuating object 141b requests the XML manipulating object 141e to register the firmware object in the perpetuating file 17. Proceeding to step S305 following step S304, the XML manipulating object 141e calls the "getType" method of the firmware object whose registration is requested (hereinafter referred to as a current object), thereby acquiring the type name (firmware) of the current object.

Proceeding to step S306 following step S305, the XML manipulating object 141e obtains a definition (object element 1452 (Fig. 5)) corresponding to the current object from the object definition file 145 based on the type name of the current object. Proceeding to step S307 following step S306, the XML manipulating object 141e obtains an ID corresponding to the current object. If the place for perpetuation is the perpetuating DB 16, it is the database that obtains an ID. If the place for perpetuation is the perpetuating file 17, there is no mechanism for obtaining ID, so that the XML manipulating object 141e obtains the ID. The obtained ID is set in the current object by the "setField" method.

Proceeding to step S308 following step S307, the XML manipulating object 141e requests a DOM 171 to generate an element node (hereinafter referred to as an object node) corresponding to the current object. The name of the object node may preferably be "object" or the like that is easy to identify as an element node corresponding to an object. Proceeding to step S309 following step S308, The XML manipulating object 141e identifies the attribute name of an attribute (current attribute) based on the field element in the object element 1452, and calls the "getField" method of the current object by using the attribute name as a parameter so as to obtain the attribute value of the current attribute.

Proceeding to step S310 following step S309, the XML manipulating object 141e requests the DOM 171 to generate an element node (hereinafter referred to as an attribute node) inclusive of information such as the attribute name and attribute value of the current attribute as a child node of the object node. The element name of the attribute node may preferably be "field" or the like that is easy to identify as an element node corresponding to an attribute. The attribute value of the current attribute is subjected to data-type conversion based on the mapping information about the field attribute with respect to the current attribute.

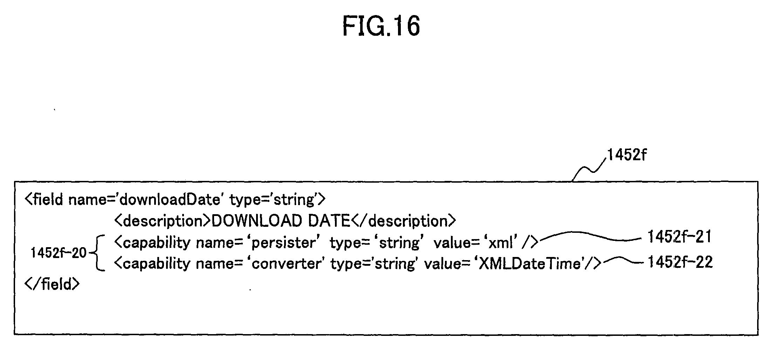

Fig. 16 is a drawing showing an example of mapping information in the case where the place for perpetuation is a perpetuating file. In Fig. 16, the field element 1452f corresponding to the downloadDate attribute is extracted from Fig. 5, corresponding to Fig. 13. In the field element 1452f, a portion identified by reference numeral 1452f-20 constitutes the mapping information. A capability element 1452f-21 has the name attribute whose value is "persister", and has the value attribute whose value is "xml", which indicates that the place where the downloadDate attribute is perpetuated is an XML-type file (perpetuating file 17). A capability element 1452f-22 has the name attribute whose value is "converter", and has the value attribute whose value is "XMLDateTime", which indicates that the data type in the place where the downloadDate attribute is perpetuated is the XMLDateTime type. Accordingly, the XML manipulating object 141e converts the data type of the attribute value of the current attribute based on the capability element 1452f-22.

After the processes of steps S309 and S310, i.e., the processes for generating an attribute node for the DOM 171, are repeated for all the attributes of the current object (S311), proceeding to step S312, the XML manipulating object 141e returns the current object to the XML perpetuating object 141b. Thereafter, the processes of step S304 through step S312 are performed recursively with respect to child objects, grandchild objects, and so on of the current object, so that object element nodes are generated for the DOM 171 with respect to the child objects and the like (S313).

After the generation of object element nodes with respect to all the child objects and the like is completed, proceeding to step S314, the XML perpetuating object 141b requests the XML manipulating object 141e to end the transaction. As the XML manipulating object 141e requests the DOM 171 to generate the perpetuating file 17, the DOM 171 outputs the setting-completed information to the perpetuating file 17 based on the request (S315). As the control over the process is returned (S316), the XML perpetuating object 141b returns the current object to the software management service 13a (S317).

In this manner, a managed object is dynamically converted into the format conforming to the place for perpetuation based on the object definition file 145 in the case where the place for perpetuation is the perpetuating file 17, just like the case where the place for perpetuation is the perpetuating DB 16. Even if the place for perpetuation is a memory, a similar procedure can be performed to perpetuate a managed object in the memory.

The above description has been provided with reference to the examples in which a managed object is perpetuated in the perpetuating DB 16 or the perpetuating file 17. Alternatively, the attribute values of a managed object may as well be assigned to the device 30. Namely, the attributes of a managed object (e.g., a device-type object) may be related to parameters of the device 30, which makes it possible to make the parameters of the device 30 reflect the attribute values of the managed object. When viewed from the higher-order application (Web service 13), this appears the same as in the case where the attribute values of a managed object are assigned to a database or file. The correspondences between the attributes of the managed object and the parameters of the device 30 may be given in the object definition file 145. With the provision of such correspondences in the object definition file 145, all that is necessary is to add, remove, or modify field elements corresponding to the parameters changed in the object definition file 145 when the parameters of the device 30 serving as an item to be managed are changed due to a change of models of the device 30. There is no need to modify, compile, and link the source code.

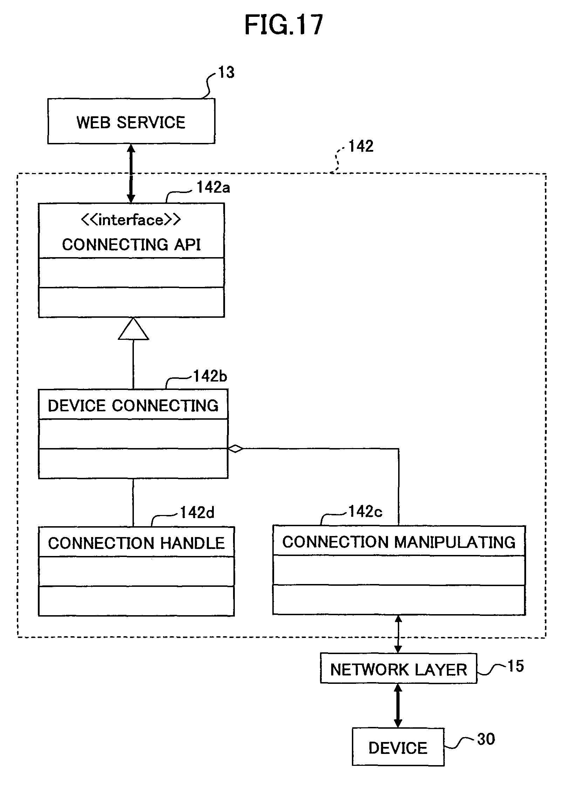

When the attribute values of a managed object are to be assigned to the parameters of the device 30, communication with the device 30 is necessary. The procedure performed by the perpetuating API module 141 as described above are thus instead performed by the connecting API module 142. Fig. 17 is a drawing showing an example of a class diagram of the connecting API module. As shown in Fig. 17, the connecting API module 142 includes a connecting API class 142a, a device connecting class 142b, a connection manipulating class 142c, and a connection handle class 142d.

The connecting API class 142a is an abstract class which defines only an interface for accessing various objects to be connected (e.g., the device 30 and the like). The device connecting class 142b is a sub-class of the connecting API class 142a, and is a concrete class implemented to conform to a corresponding connected object with respect to the interface defined in the connecting API class 142a. The device connecting class 142b corresponds to the device 30. In Fig. 17, only the device connecting class 142b is illustrated as a concrete class. Notwithstanding this, concrete classes corresponding to respective connected objects may be defined in accordance with a variation of the objects to be connected. A concrete class such as the device connecting class 142b is subjected to abstraction by a single connecting API class 142a. Because of this, the source code of the Web service 13 can be implemented by paying attention only to the connecting API class 142a. Accordingly, when a new object to be connected is added, i.e., when a concrete class corresponding to the new objected to be connected is added as a sub-class of the connecting API class 142a, there is no need to modify the source code of the Web service 13.

The device connecting class 142b aggregates the connection manipulating class 142c. The connection manipulating class provides each concrete class with an interface that hides the protocol dependent on the object to be connected corresponding to each concrete class. The connection handle class 142d is used to manage session information regarding connected objects.

If Fig. 17 is compared with Fig. 11, the connecting API class 142a corresponds to the perpetuating API class 141a, the device connecting class 142b corresponding to the XML perpetuating class 141b, the DB perpetuating class 141c, or the memory perpetuating class 141d, the connection manipulating class 142c corresponding to the XML manipulating class 141e, the DB manipulating class 141f, or the memory manipulating class 141g, and the connection handle class 142d corresponding to the transaction handle class 141h in terms of their functions. Accordingly, assignment of parameters with respect to the device 30, i.e, the conversion of a device object into device parameters, is properly performed through procedures similar to those described in connection with Fig. 12.

In recent years, built-in devices dedicated for particular functions yet able to perform information processing compatible to that of general computers have been commercially available. An example of such device is an image forming apparatus that has a plurality of applications for performing processes inherent to multiple services such as printer, copier, or facsimile, which is also referred to as a multi-function peripheral. Not limited to general-purpose computers, the function of the data management apparatus 10 according to the present embodiment may be provided to such a device by implementing the functions shown in Fig. 3 in the device. In this case, the httpd 11 is not necessarily a module for communicating through HTTP, but may be a demon program that accepts a request from clients through the protocol supported by the device. Further, the Web application 12 does not need to be a Web application, but may be an application called in response to a request from a client.

Further, the present invention is not limited to these embodiments, but various variations and modifications may be made without departing from the scope of the present invention.

## Claims

1. An information processing apparatus, comprising:
an object generating unit configured to generate an object; and
a memory operable to store first definition information that defines attribute information of the object according to a type of the object, **characterized in that**
the object includes an attribute information managing unit configured to manage the attribute information by associating attribute names with attribute values, and an interference unit, applicable to a plurality of items of the attribute information, configured to receive a request for setting the attribute information and a request for acquiring the attribute information,
and said object generating unit is configured to assign the attribute information corresponding to the type of the generated object to the object based on the first definition information.

2. The information processing apparatus as claimed in claim 1, wherein said object generating unit includes an interface configured to receive a generation request for generating the object, and is configured to assign the attribute information corresponding to a type specified by the generation request to the generated object.

3. The information processing apparatus as claimed in claim 1, wherein said attribute information managing unit is a container configured to store the attribute values with the attribute names serving as keys.

4. The information processing apparatus as claimed in claim 1, wherein said interface unit configured to receive the request for setting the attribute information receives an attribute name and an attribute value as input information, and registers the attribute value associated with the attribute name specified by the input information in said attribute information managing unit.

5. The information processing apparatus as claimed in claim 1, wherein said interface unit configured to receive the request for acquiring the attribute information receives an attribute name as input information, and outputs an attribute value associated with the attribute name specified by the input information in the attribute information managing unit.

6. The information processing apparatus as claimed in claim 1, wherein the first definition information further include relation information indicative of relationships with one or more other objects according to the type of the object, and the object includes:
a relation information managing unit configured to manage the relation information by associating one or more relation names identifying the relation information with information regarding or pointing to the one or more other objects; and
an interface unit, applicable to a plurality of items of the relation information, configured to receive a request for setting the relation information and a request for acquiring the relation information,
and wherein said object generating unit is configured to assign the relation information corresponding to the type of the generated object to the object based on the first definition information.

7. The information processing apparatus as claimed in claim 6, wherein said object generating unit includes an interface configured to receive a generation request for generating the object, and is configured to assign the relation information corresponding to a type specified by the generation request to the generated object.

8. The information processing apparatus as claimed in claim 6, wherein said relation information managing unit is a container configured to store the information regarding or pointing to the one or more other objects with the relation names serving as keys.

9. The information processing apparatus as claimed in claim 6, wherein said interface unit configured to receive the request for setting the relation information receives a relation name and information regarding or pointing to another object as input information, and registers the information regarding or pointing to another object associated with the relation name specified by the input information in said relation information managing unit.

10. The information processing apparatus as claimed in claim 6, wherein said interface unit configured to receive the request for acquiring the relation information receives a relation name as input information, and outputs information regarding or pointing to another object associated with the relation name specified by the input information in the relation information managing unit.

11. The information processing apparatus as claimed in claim 1, further comprising:
a second definition information managing unit configured to manage second definition information that defines correspondences between the attribute information of the object and a destination to which the attribute values are assigned; and
a conversion unit configured to obtain the attribute values possessed by the object through said interface unit based on the second definition information managed by said second definition information managing unit, and configured to convert the object into a format corresponding to the destination by using the obtained attribute values.

12. The information processing apparatus as claimed in claim 11, wherein the second definition information defines the correspondences according to the type of the object.

13. The information processing apparatus as claimed in claim 11, wherein the correspondences are defined according to types of attribute information of the object.

14. The information processing apparatus as claimed in claim 11, wherein the correspondences include a definition of a data type of an attribute value in the destination.

15. The information processing apparatus as claimed in claim 11, wherein said conversion unit is configured to convert the object into a record of a database.

16. The information processing apparatus as claimed in claim 15, wherein said conversion unit is configured to convert the attribute information of the object into an item constituting the record based on the second definition information.

17. The information processing apparatus as claimed in claim 15, wherein the correspondences include information for identifying a table in which the record is registered in the database.

18. The information processing apparatus as claimed in claim 16, wherein the correspondences include information for identifying the item.

19. The information processing apparatus as claimed in claim 11, wherein said conversion unit is configured to convert the object into a format corresponding to a predetermined file.

20. The information processing apparatus as claimed in claim 19, wherein said conversion unit is configured to convert the object into an element constituting an XML-format structure in the predetermined file.

21. The information processing apparatus as claimed in claim 20, wherein said conversion unit is configured to convert based on the second definition information the attribute information of the object into a child element of the element into which the object is converted.

22. The information processing apparatus as claimed in claim 11, wherein said conversion unit is configured to convert the object into a format corresponding to a predetermined device.

23. The information processing apparatus as claimed in claim 22, wherein said conversion unit is configured to covert the attribute information of the object into one or more parameters of the device based on the second definition information.

24. The information processing apparatus as claimed in claim 11, wherein said conversion unit is configured to assign information obtained from the destination to the object through said interface unit based on the second definition information, thereby converting information having the format corresponding to the destination into the object.

25. A method of generating an object,
**characterized by** comprising the steps of:
obtaining first definition information that defines attribute information of an object according to a type of the object;
generating an object that includes an attribute information managing unit configured to manage the attribute information by associating attribute names with attribute values and an interference unit, applicable to a plurality of items of the attribute information, configured to receive a request for setting the attribute information and a request for acquiring the attribute information; and
assigning the attribute information corresponding to the type of the generated object to the object based on the first definition information.

26. The method as claimed in claim 25, wherein the first definition information further include relation information indicative of relationships with one or more other objects according to the type of the object, and said step of generating an object generates a relation information managing unit configured to manage the relation information by associating one or more relation names identifying the relation information with information regarding or pointing to the one or more other objects and an interface unit, applicable to a plurality of items of the relation information, configured to receive a request for setting the relation information and a request for acquiring the relation information,
said method further comprising a step of assigning the relation information corresponding to the type of the generated object to the object based on the first definition information.

27. A method of converting the object generated by the method of claim 25, **characterized by** comprising the steps of:
obtaining the attribute values possessed by the object through said interface unit based on second definition information that defines correspondences between the attribute information of the object and a destination to which the attribute values are assigned; and
converting the object into a format corresponding to the destination by using the obtained attribute values.

28. The method as claimed in claim 27, further comprising the steps of:
obtaining predetermined information from the destination; and
assigning the predetermined information to the object through said interface unit based on the second definition information, thereby converting information having the format corresponding to the destination into the object.

29. A record medium having a program embodied therein for causing a computer to generate an object, **characterized in that** said program comprises the steps of:
obtaining first definition information that defines attribute information of an object according to a type of the object;
generating an object that includes an attribute information managing unit configured to manage the attribute information by associating attribute names with attribute values and an interference unit, applicable to a plurality of items of the attribute information, configured to receive a request for setting the attribute information and a request for acquiring the attribute information; and
assigning the attribute information corresponding to the type of the generated object to the object based on the first definition information.

30. A record medium having a program embodied therein for causing a computer to convert the object generated by the program of claim 29, **characterized in that** the program for causing a computer to convert the object comprises the steps of:
obtaining the attribute values possessed by the object through said interface unit based on second definition information that defines correspondences between the attribute information of the object and a destination to which the attribute values are assigned; and
converting the object into a format corresponding to the destination by using the obtained attribute values.
